Europäisches Patentamt

(19) European Patent Office

Office européen des brevets

(11) Veröffentlichungsnummer: **0 076 975**
**B1**

(12) **EUROPÄISCHE PATENTSCHRIFT**

(45) Veröffentlichungstag der Patentschrift:
17.04.85

(51) Int. Cl.⁴: **C 03 C 17/10**, G 02 B 1/10,
B 32 B 33/00

(21) Anmeldenummer: **82109036.2**

(22) Anmeldetag: **30.09.82**

(54) **Gegen Umwelteinflüsse beständiges Mehrschichtsystem für Wärmeschutzanwendung.**

(30) Priorität: **09.10.81 DE 3140100**

(43) Veröffentlichungstag der Anmeldung:
**20.04.83 Patentblatt 83/16**

(45) Bekanntmachung des Hinweises auf die Patenterteilung:
**17.04.85 Patentblatt 85/16**

(84) Benannte Vertragsstaaten:
**AT BE CH DE FR GB IT LI NL SE**

(56) Entgegenhaltungen:
**EP - A - 0 031 278**
**DE - A - 2 854 213**

(73) Patentinhaber: **ROBERT BOSCH GMBH, Postfach 50,
D-7000 Stuttgart 1 (DE)**

(72) Erfinder: **Brill, Klaus, Dr., Neuhaldenstrasse 24,
D-7015 Korntal (DE)**
Erfinder: **Grothe, Wolfgang, Talstrasse 19,
D-7531 Tiefenbronn (DE)**

**Beschreibung**

Die Erfindung geht aus von einem Mehrschichtsystem nach der Gattung der Ansprüche 1 und 5, wie es in der DE-A-2 854 213 beschrieben ist. Dieses bekannte Mehrschichtsystem enthält auf einem Glassubstrat eine beidseitig von Metalloxidschichten bedeckte Metallschicht, welche beispielsweise aus Silber bestehen kann. Die zwischen der Metallschicht und dem Substrat liegende dielektrische Schicht ist unterteilt in eine Metalloxidschicht aus ZnO, In$_2$O$_3$, SnO$_2$ oder Mischungen dieser Oxide und in eine weitere Schicht aus Wismutoxid, welche eine Flammreduzierung des Schichtsystems erlaubt. Die beidseitigen Metalloxidschichten dienen dem Schutz der Metallschicht.

Durch die erfindungsgemäßen Weiterbildungen des Mehrschichtsystems erreicht man eine deutliche Verbesserung der Beständigkeit des Schichtsystems gegen Umwelteinflüsse, insbesondere gegen Einflüsse durch Schadgase und durch UV-Licht, welche das Schichtsystem von Wärmeschutzfolien schädigen. Korrosionsprüfungen und Bestrahlungen mit UV-Licht haben eine deutliche Erhöhung der Beständigkeit des Schichtsystems aufgezeigt. Die Stoffe und ihre Kombination sind dabei so ausgewählt, daß die geforderten optischen Werte erreicht werden, d. h., daß ein hohes Reflexionsvermögen im fernen Infrarot-Spektralbereich und ein hohes Transmissionsvermögen im sichtbaren Spektralbereich und im nahen Infrarot-Spektralbereich gewährleistet ist. Die Gesamtdicke der Deckschicht auf jeder Seite der Metallschicht ist durch die Phasenbedingung gegeben, nach welcher der Gangunterschied, der sich aus der optischen Weglänge und dem Phasensprung ergibt $\lambda/2$ betragen muß.

Zwei Ausführungsbeispiele der Erfindung sind in der Zeichnung schematisch dargestellt.

Fig. 1 zeigt ein Mehrschichtsystem mit einer Metallschicht und zwei getrennten dielektrischen Schutzschichten auf beiden Seiten der Metallschicht,

Fig. 2 zeigt eine Anordnung mit einer Metallschicht und jeweils einer dielektrischen Mischschicht auf beiden Seiten der Metallschicht.

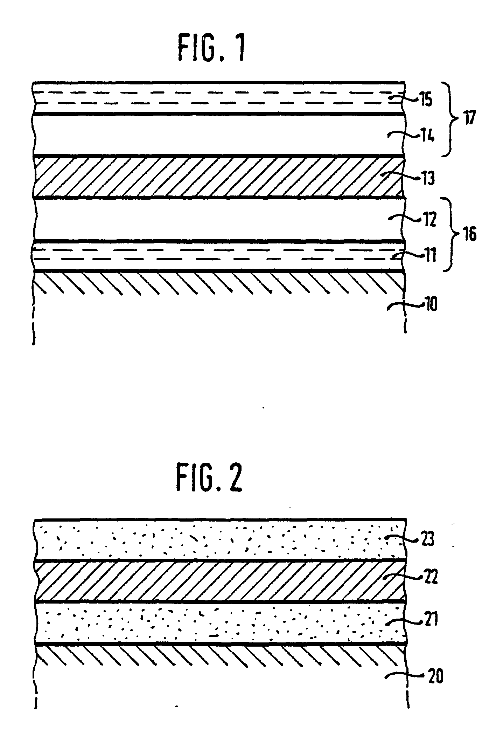

In Fig. 1 ist mit 10 ein Träger bezeichnet, auf den nacheinander eine Korrosionsschutzschicht 11, eine UV-Licht-Schutzschicht 12, eine Metallschicht 13, dann wiederum eine UV-Licht-Schutzschicht 14 und eine Korrosionsschicht 15 aufgebracht sind. Die Schichten 11 und 12 bilden eine dem Träger benachbarte Deckschicht 16, die Schichten 14 und 15 eine äußere Deckschicht 17.

Zur Verhinderung von schädlichen Umwelteinflüssen auf das Schichtsystem ist dieses so ausgebildet, daß wenigstens eine der beiden dielektrischen Deckschichten, nämlich die freiliegende Deckschicht 17, Wismutoxid enthält. Zu diesem Zweck ist bei der Anordnung gemäß Fig. 1 die Deckschicht 17 unterteilt in eine UV-Licht-Schutzschicht 14 und eine Korrosionsschutzschicht 15, welche aus Wismutoxid besteht. Die UV-Licht-Schutzschicht 14 besteht aus Titanoxid und/oder Titanoxinitrid, vorzugsweise aus Titanoxid, in der Regel mit einem Anteil Titannitrid. Die Deckschicht 16 mit der Korrosionsschutzschicht 11 und der UV-Licht-Schutzschicht 12 ist beim Ausführungsbeispiel gemäß Fig. 1 spiegelbildlich in gleicher Weise aufgebaut wie die Deckschicht 17, wobei die Korrosionsschutzschicht 11 auf den Träger 10 liegt und durch eine längere Lagerung möglicherweise auftretende schädliche Einflüsse vom Träger 10 her verhindert. Der Wismutanteil in der Deckschicht 17 und vorzugsweise auch in der Deckschicht 16 beträgt zwischen 10 und 85 Gewichtsprozent des gesamten Metallgehaltes der dielektrischen Deckschicht, d. h. zwischen 10 und 85 Gewichtsprozent des gesamten Metallgehaltes aus Wismut und beispielsweise Titan. Anstelle von Titannitrid können die UV-Licht-Schutzschichten 12 und 14 auch Titanoxinitrid enthalten. Die Metallschicht besteht vorzugsweise aus Silber, als Schichtmetalle können jedoch auch Gold, Aluminium, Kupfer od. dgl. verwendet werden. Die Gesamtdicke jeder Deckschicht 16 und 17 beträgt 15 bis 40 nm, wovon 20 bis 60% auf die Korrosionsschutzschicht 11, 15 aus Wismutoxid und 40 bis 80% auf die UV-Licht-Schutzschicht 12, 14 aus Titanoxid und/oder Titanoxinitrid entfallen. Die Wismutoxidschicht hat bei dieser Anordnung nur noch etwa $^1/_3$ der Dicke, die sie ohne zusätzliche UV-Licht-Schutzschicht benötigen würde. Veränderungen des Wismutoxids aufgrund der UV-Einstrahlung, welche sich nicht vollständig verhindern lassen und zu einer höheren Absorption im sichtbaren Bereich des Spektrums führen, wirken sich wegen der geringeren Dicke der Wismutoxidschicht optisch kaum noch aus.

Aus dem beschriebenen Aufbau des Schichtsystems ergibt sich der maximale Wismutanteil in den dielektrischen Schichten. Wenn 60% der Dicke der dielektrischen Schichten auf das Wismutoxid entfällt, errechnet sich, im Falle der Kombination mit Titandioxid, ein Wismutanteil von 85 Gew.-%.

Fig. 2 zeigt ein weiteres Ausführungsbeispiel der Erfindung mit einem Träger 20, auf den zunächst eine Deckschicht 21, hierauf eine Metallschicht 22 und zuletzt eine Deckschicht 23 aufgebracht sind. Der Träger 20 besteht dabei zweckmäßigerweise — ebenso wie bei der Anordnung gemäß Fig. 1 — aus Polyesterfolie. Als Metallschicht 22 dient vorzugsweise wiederum eine Silberschicht. Die Deckschichten 21 und 23 bestehen beim Ausführungsbeispiel gemäß Fig. 2 aus Mischoxiden von Wismutoxid und wenigstens einem weiteren Oxid der Metalle Zinn, Blei, Indium, Titan, Tantal, Cer und Antimon. Als besonders vorteilhaft hat sich ein Mischoxid aus Wismutoxid und Oxiden der Metalle Indium, Zinn und Blei erwiesen. Die metallischen Komponenten in der Schicht betrugen dabei vorzugsweise 15 Gewichtsprozent Wismut, 25 Gewichtsprozent Indium, 25 Gewichtsprozent Zinn und 35 Gewichtsprozent Blei, wobei jedoch die angegebenen Prozentsätze in gewissen Grenzen schwanken können. Versuche haben ergeben, daß bei dieser Art der Schichten ein Wismutanteil von 10 Gew.-% nicht unterschritten werden sollte.

Zur Optimierung der optischen Eigenschaften die beiden Anordnungen gemäß Fig. 1 oder 2 kann sich eine Unsymmetrie der Oxidschichten auf beiden Seiten der Silberschicht als vorteilhaft erweisen. Im allgemeinen ist es unter optischen Gesichtspunkten günstiger, wenn die freiliegende Deckschicht 17 bzw. 23 dünner ausgebildet ist als die dem Träger 10, 20 zugewandte Deckschicht 16, 21.

Untersuchungen haben gezeigt, daß die Reaktionen des Mehrschichtsystems auf die verschiedenen Beanspruchungen durch Schadgas und/oder UV-Einwirkung unterschiedlich sind. So zeigt eine Silberschicht im System Wismutoxid-Silber-Wismutoxid eine relativ gute Beständigkeit gegen $SO_2$ Einflüsse, ist aber gegen UV-Bestrahlung nicht sehr beständig. Bei starker UV-Einwirkung erfolgt eine Trübung, die einerseits, wie zuvor erwähnt, durch eine Veränderung des Wismutoxid bedingt ist, andererseits jedoch auch durch eine Diffusion und Koagulation des Silbers. Dieser Vorgang ist mit einem Widerstandsanstieg der Silberschicht verbunden. In einem System Titanoxid-Silber-Titanoxid, wobei das Titanoxid einen Titannitridanteil enthalten kann, bietet die Titanoxidschicht einen geringeren Schutz gegen $SO_2$-Einflüsse, besitzt aber eine wesentlich höhere UV-Schutzwirkung für das Silber. Das erfindungsgemäße Schichtsystem nutzt die unterschiedlichen Einflüsse auf die verschiedenen Materialien derart, daß jeweils die positiven Eigenschaften der Wismutoxidschicht und beispielsweise einer Titanoxidschicht genutzt werden. Hierzu ist bei der Anordnung gemäß Fig. 1 auf beide Seiten der Silberschicht 13 zunächst eine UV-Licht-Schutzschicht 12, 14 aufgetragen und erst hierauf als Korrosionsschutzschicht 11 bzw. 15 eine Abdeckung aus Wismutoxid. Die Titanoxidschicht verhindert der bei UV-Einwirkung sonst zu beobachtende Diffusion und Koagulation des Silbers. Die Wismutoxidauflage verhindert Korrosionserscheinungen, die bei Verwendung von Titanoxid allein sehr viel früher auftreten und sich insbesondere örtlich durch Lochbildung bemerkbar machen. Die Wismutoxidschicht kann dabei dünner sein als bei ihrer alleinigen Verwendung, was sich wiederum bei einer nicht ganz zu verhindernden Eintrübung positiv auswirkt. Die Gesamtdicke der Schicht liegt zweckmäßigerweise im Bereich zwischen 15 und 40 nm. Bei einem Ausführungsbeispiel mit hoher Resistenz gegen die auftretenden Umfeldeinflüsse und einer Gesamtdicke von 36 nm betrug die Dicke der Silberschicht und der Wismutoxidschicht jeweils 12 nm, während die Titanoxidschicht als UV-Licht-Schutzschicht eine Dicke von 24 nm aufwies. Die Gesamtdicke und die einzelnen Schichtdicken müssen jedoch jeweils den optischen Forderungen angepaßt werden.

Eine ähnliche Verbesserung der Beständigkeit wie beim Ausführungsbeispiel gemäß Fig. 1 läßt sich auch bei einer Ausführung gemäß Fig. 2 erreichen, wo die Diffusion des Metalls, insbesondere die Diffusion und Koagulation von Silber zwischen Wismutoxidschichten, durch Beimengung anderer Oxide mit hoher Brechzahl verhindert worden ist. Der Wismutanteil in den Deckschichten 21 und 23 sollte dabei vorzugsweise 50 Gewichtsprozent der gesamten metallischen Anteile in den Deckschichten nicht überschreiten, weil sonst wiederum die durch UV-Licht entstehenden Beeinträchtigungen sich zu stark auswirken. Als Beimischungen zum Wismutoxid eignen sich insbesondere die Oxide von Zinn, Blei, Indium, Zink, Antimon, Tantal, Cer und Titan. Die Mischung kann dabei aus der Beimengung eines einzigen Fremdoxides zum Wismutoxid bestehen; besonders gute Ergebnisse sind jedoch erhalten worden durch Beimischung mehrerer Oxide aus der genannten Gruppe. Die Verbesserungen durch die genannten Beimischungen zum Wismutoxid betreffen sowohl die optischen Eigenschaften wie auch die Korrosionsbeständigkeit und die UV-Empfindlichkeit.

## Patentansprüche

1. Mehrschichtsystem mit hohem Reflexionsvermögen im fernen Infrarot-Spektralbereich und mit hohem Transmissionsvermögen im sichtbaren Spektralbereich und im nahen Infrarot-Spektralbereich, mit einem Träger, mit einer Metallschicht, vorzugsweise einer Silberschicht, und mit wenigstens einer dielektrischen Deckschicht auf beiden Seiten der Metallschicht, wobei wenigstens eine der beiden dielektrischen Deckschichten Wismutoxid enthält, dadurch gekennzeichnet, daß die dielektrische Deckschicht (16, 17) aus einer Korrosionsschutzschicht (11, 15) aus Wismutoxid ($Bi_2O_3$) und einer UV-Licht-Schutzschicht (12, 14) aus Titanoxid ($TiO_x$) und/oder Titanoxidnitrid ($TiO_xTiN$) besteht und der Wismutanteil zwischen 10 und 85 Gewichtsprozent des gesamten Metallgehaltes der dielektrischen Deckschicht liegt.

2. Mehrschichtsystem nach Anspruch 1, dadurch gekennzeichnet, daß auf eine Metallschicht (13) aus Silber zunächst beidseitig eine UV-Licht-Schutzschicht (12, 14) aus Titanoxid und/oder Titanoxidnitrid und hierauf beidseitig eine Korrosionsschutzschicht (11, 15) aufgebracht ist.

3. Mehrschichtsystem nach Anspruch 1 oder 2, dadurch gekennzeichnet, daß die Gesamtdicke jeder Deckschicht (16, 17) 15 bis 40 nm beträgt, wovon 20 bis 60% auf die Korrosionsschutzschicht (11, 15) aus Wismutoxid und 40 bis 80% auf die UV-Licht-Schutzschicht (12, 14) aus Titanoxid und/oder Titanoxinitrid entfallen.

4. Mehrschichtsystem nach einem der vorhergehenden Ansprüche, dadurch gekennzeichnet, daß die beiden Deckschichten (16, 17; 21, 23) unterschiedlich dick sind, wobei die frei liegende Deckschicht (17; 23) dünner ausgebildet ist, als die dem Träger (10, 20) zugewandte Deckschicht (16; 21).

5. Mehrschichtsystem mit hohem Reflexionsvermögen im fernen Infrarot-Spektralbereich und mit hohem Transmissionsvermögen im sichtbaren Spektralbereich und im nahen Infrarot-Spektralbereich, mit einem Träger, mit einer Metallschicht, vorzugsweise einer Silberschicht, und mit wenigstens einer dielektrischen Deckschicht auf beiden Seiten der Metallschicht, wobei wenigstens eine der beiden dielektrischen Deckschichten Wismutoxid enthält, dadurch gekennzeichnet, daß wenigstens eine der beiden Deckschichten (21, 23) aus einem Mischoxid besteht aus Wismutoxid und wenigstens einem weiteren Oxid der Metalle Zinn (Sn), Blei (Pb), Indium (In), Zink (Zn), Titan (Ti), Tantal (Ta), Cer (Ce) und Antimon (Sb) und daß der Wismutanteil zwischen 10 und 85 Gewichtsprozent des gesamten Metallgehaltes der dielektrischen Deckschicht liegt.

6. Mehrschichtsystem nach Anspruch 5, dadurch gekennzeichnet, daß wenigstens eine der beiden Deckschichten (21, 23) aus einem Mischoxid hochbrechender Oxide besteht mit einem Wismutoxidanteil, wobei der im Wismutoxid gebundene Wismutanteil vorzugsweise 10 bis 50 Gew.-% des gesamten gebundenen Metallanteils beträgt.

7. Mehrschichtsystem nach Anspruch 5, dadurch gekennzeichnet, daß die Deckschicht (21, 23) aus einem Mischoxid der Metalle Wismut (Bi), Indium (In), Zinn (Sn) und Blei (Pb) besteht, vorzugsweise mit ca. 15 Gewichtsprozent Bi, 25 Gewichtsprozent In, 25 Gewichtsprozent Sn und 35 Gewichtsprozent Pb.

8. Mehrschichtsystem nach einem der vorhergehenden Ansprüche, dadurch gekennzeichnet, daß der Träger (10, 20) aus einer Polyesterfolie besteht.

## Claims

1. Multi-layer system of high reflectivity in the far infrared spectral region and of high transmissivity in the visible spectral region and in the near infrared spectral region, having a base, a metal layer, preferably a silver layer, and at least one dielectric covering layer on both sides of the metal layer, at least one of the two dielectric covering layers containing bismuth oxide, characterised in that the dielectric covering layer (16, 17) consists of an anti-corrosion layer (11, 15) of bismuth oxide ($Bi_2O_3$) and a UV-protective layer (12, 14) of titanium oxide ($TiO_x$ and/or titanium oxide nitride ($TiO_xTiN$) and the bismuth fraction is between 10 and 85 per cent by weight of the total metal content of the dielectric covering layer.

2. Multi-layer system according to Claim 1, characterised in that a UV-protective layer (12, 14) of titanium oxide and/or titanium oxide nitride has first been applied to both sides of a metal layer (13) of silver and, subsequently, an anti-corrosion layer (11, 15) has been applied to both sides thereof.

3. Multi-layer system according to Claim 1 or 2, characterised in that the total thickness of each covering layer (16, 17) is 15 to 40 nm, of which 20 to 60% is taken up by the anti-corrosion layer (11, 15) of bismuth oxide and 40 to 80% is taken up by the UV-protective layer (12, 14) of titanium oxide nitride.

4. Multi-layer system according to one of the preceding claims, characterised in that the two covering layers (16, 17; 21, 23) have different thicknesses, the exposed covering layer (17; 23) being thinner than the covering layer (16; 21) facing the base (10, 20).

5. Multi-layer system of high reflectivity in the far infrared spectral region and of high transmissivity in the visible spectral region and in the near infrared spectral region, having a base, a metal layer, preferably a silver layer, and at least one dielectric covering layer on both sides of the metal layer, at least one of the two dielectric covering layers containing bismuth oxide, characterised in that at least one of the two covering layers (21, 23) consists of a mixed oxide or bismuth oxide and at least one further oxide of the metals tin (Sn), lead (Pb), indium (In), zinc (Zn), titanium (Ti), tantalum (Ta), cerium (Ce) and antimony (Sb), and that the bismuth fraction is between 10 and 85 per cent by weight of the total metal content of the dielectric covering layer.

6. Multi-layer system according to Claim 5, characterised in that at least one of the two covering layers (21, 23) consists of a mixed oxide of high-refractive index oxides with a proportion of bismuth oxide, the bismuth fraction bound in the bismuth oxide amounting preferably to 10 to 50% by weight of the total bound metal fraction.

7. Multi-layer system according to Claim 5, characterised in that the covering layer (21, 23) consists of a mixed oxide of the metals bismuth (Bi), indium (In), tin (Sn) and lead (Pb), preferably with about 15 per cent by weight of Bi, 25 per cent by weight of In, 25 per cent by weight of Sn and 35% by weight of Pb.

8. Multi-layer system according to one of the preceding claims, characterised in that the base (10, 20) consists of a polyester film.

## Revendications

1. Système multicouche ayant un pouvoir de réflexion élevé dans le domaine du spectre infrarouge lointain, et un pouvoir de transmission élevé dans le domaine visible du spectre et dans le domaine du spectre infra-rouge proche, comportant un support avec une couche métallique, de préférence une couche d'argent et au moins une couche diélectrique de recouvrement sur les deux faces de la couche métallique, où au moins une des deux couches diélectriques contient de l'oxyde de bismuth, système caractérise en ce que la couche diélectrique (16, 17) est constituée d'une couche protectrice contre la corrosion (11, 15) en oxyde de bismuth (Bi$_2$O$_3$) et d'une couche protectrice contre la lumière UV (12, 14) en oxyde de titane (TiO$_x$) et/ou en oxynitrure de titane (TiO$_x$TiN), et que la proportion de bismuth se situe entre 10 et 85% en poids de la teneur totale en métaux des couches diélectriques de recouvrement.

2. Système multicouche suivant la revendication 1, caractérisé en ce que sur la couche de métal (13) en argent, on applique d'abord, sur les deux faces, une couche protectrice contre la lumière UV (12, 14) en oxyde de titane et/ou oxynitrure de titane et par-dessus, sur les deux faces, une couche protectrice contre la corrosion (11, 15).

3. Système multicouche suivant les revendications 1 ou 2, caractérisé en ce que l'épaisseur de chacune des couches de recouvrement (16, 17) se monte à 15 à 40 nm, dont 20 à 60% concernent la couche protectrice contre la corrosion (11, 15) en oxyde de bismuth, et 40 à 80% la couche protectrice contre la lumière UV (12, 14) en oxyde de titane et/ou oxynitrure de titane.

4. Système multicouche suivant l'une des revendications précédentes, caractérisé en ce que les deux couches de recouvrement (16, 17; 21, 23) sont d'épaisseurs différentes, la couche de recouvrement qui est à l'air libre (17, 23) étant plus mince que la couche (16, 21) tournée vers le support (10, 20).

5. Système multicouche ayant un pouvoir de réflexion élevé dans le domaine du spectre infrarouge lointain, et un pouvoir de transmission élevé dans le domaine visible du spectre et dans le domaine du spectre infra-rouge proche, comportant un support avec une couche métallique, de préférence une couche d'argent et au moins une couche diélectrique de recouvrement sur les deux faces de la couche métallique, où au moins une des deux couches diélectriques contient de l'oxyde de bismuth, caractérisé en ce qu'au moins une des deux couches de recouvrement (21, 23) diélectriques est constituée d'un oxyde mixte formé d'oxyde de bismuth et d'au moins un autre oxyde des métaux étain, (Sn), plomb (Pb), indium (In), zinc (Zn), titane (Ti), tantale (Ta), Cerium (Ce) et antimoine (Sb), et que la proportion du bismuth se situe entre 10 et 85% en poids de la teneur totale en métaux de la couche diélectrique de recouvrement.

6. Système multicouche suivant la revendication 5, caractérisé en ce qu'au moins une des deux couches de recouvrement (21, 23) est constituée d'un oxyde mixte à indice de réfraction élevé, avec une proportion d'oxyde de bismuth, où la proportion de bismuth, combiné dans l'oxyde de bismuth, se monte de préférence à 10 à 50% en poids de la proportion totale de métaux combinés.

7. Système multicouche suivant la revendication 5, caractérisé en ce que la couche de recouvrement (21, 23) est constituée d'un oxyde mixte des métaux bismuth (Bi), indium (In), étain (Sn) et plomb (Pb), avec, de préférence environ 15% en poids de Bi, 25% en poids de In, 25% en poids de Sn et 35% en poids de Pb.

8. Système multicouche suivant l'une des revendications précédentes, caractérisé en ce que le support (10, 20), est fait d'une feuille de polyester.

## FIG. 1

## FIG. 2